Europäisches Patentamt

(19) European Patent Office

Office européen des brevets

(11) Numéro de publication: **0 274 959**
**B1**

(12) **FASCICULE DE BREVET EUROPEEN**

(45) Date de publication du fascicule du brevet:
01.08.90

(21) Numéro de dépôt: **87402978.8**

(22) Date de dépôt: **23.12.87**

(51) Int. Cl.⁵: **C03B 40/02, C03B 9/48**

(54) Revêtement permanent anti-adhérent de moules de verrerie et outillages connexes.

(30) Priorité: **30.12.86 FR 8618378**

(43) Date de publication de la demande:
**20.07.88 Bulletin 88/29**

(45) Mention de la délivrance du brevet:
**01.08.90 Bulletin 90/31**

(84) Etats contractants désignés:
**BE DE ES FR GB IT NL**

(56) Documents cités:
**GB-A- 2 130 242**
**US-A- 2 201 049**
**US-A- 2 212 984**
**US-A- 3 994 703**

**GLASS AND CERAMICS,**
vol. 37, no. 1,2, janvier-février 1980, pages 81,82, Plenum
Publishing Corp., New York, US; V.M. PLESKACH et al.:
"Experience with electric-spark alloying to increase the
wear resistance of glass molds"

(73) Titulaire: **CENTRE STEPHANOIS DE RECHERCHES
MECANIQUES HYDROMECANIQUE ET FROTTEMENT
Société dite:, Zone Industrielle Sud Rue Benoît
Fourneyron, F-42160 Andrezieux Boutheon(FR)**

(72) Inventeur: **Cartier, Michel,
F-42600 Chalain-Le-Comtal(FR)**
Inventeur: **Farjaudon, Jean-Paul, Les Cèdres Montée de
Collonges, F-42170 Saint-Just-Saint-Rambert(FR)**

(74) Mandataire: **CABINET BONNET-THIRION, 95 Boulevard
Beaumarchais, F-75003 Paris(FR)**

## Description

L'invention se rapporte à un revêtement permanent d'outillages métalliques pour la mise en forme d'une masse de verre visqueux, notamment moules de verrerie, ce revêtement étant destiné à éviter tout collage de la masse de verre sur les parois avec lesquelles elle est mise en contact.

Dans la fabrication en série d'articles en verre creux, on met en oeuvre principalement trois procédés de moulage : le soufflage en moule d'une paraison, le pressage entre matrice et poinçon d'une goutte calibrée de verre, et la centrifugation. Ce dernier procédé est utilisé surtout pour la fabrication d'articles spéciaux ; le pressage est utilisé largement pour la fabrication d'articles industriels, tels les pavés de verre, les articles de vaisselle et certains articles de gobeletterie ; le soufflage en moule est utilisé presque exclusivement pour la fabrication des bouteilles et flacons, et très largement en gobeletterie.

Quel que soit le procédé mis en oeuvre, la forme extérieure de l'article (ainsi que la forme intérieure dans le cas du pressage) est déterminée par la forme d'une cavité intérieure d'un moule métallique contre les parois de laquelle le verre, porté à une température où sa viscosité est appropriée, est pressé contre les parois pour épouser leur forme et se refroidir suffisamment pour être figé dans cette forme, c'est-à-dire avoir acquis une viscosité suffisamment élevée pour ne pas se déformer sensiblement au cours des manipulations.

On rappelle qu'on appelle palier de travail d'un verre la plage de température où le verre est de viscosité suffisante pour ne se déformer que lentement, mais suffisamment faible pour se déformer sour l'effet de forces modérées. Par ailleurs, tous les verres possèdent un point de transformation où la courbe de dilatation présente un coude, et en deçà duquel un refroidissement rapide induit des tensions internes. On admet généralement que la viscosité des verres au point de transformation est de $10.^{14}$ Pa.s.

En fabrication de série, on utilise des moules métalliques qui présentent une conductivité thermique suffisante pour figer rapidement le verre au contact. Cette conductivité est d'autant plus nécessaire que les moules doivent être suffisamment chauds avant le moulage pour que le verre ne se refroidisse pas à leur contact en dessous du point de transformation. Le métal le plus couramment employé est la fonte, de forme stable à chaud, facile à usiner avec des polis fins, et relativement moins susceptible de collage que les aciers ; on utilise également des aciers spéciaux (inoxydables réfractaires) ; on a utilisé des alliages cuivreux pour favoriser le refroidissement du verre et le maintien en température des moules aux cadences élevées. Ces alliages sont de moins en moins utilisés.

Il va de soi qu'il faut éviter que le verre colle aux parois du moule, le collage pouvant provoquer d'une part un arrachement superficiel de verre sur l'article en moulage, et d'autre part une mauvaise répartition du verre le long des parois du moule, en freinant localement son glissement. Le défaut risque de se répercuter sur les articles qui seront moulés par la suite si le moule n'est pas débarrassé du verre collé. Ces opérations de remise en état des moules ont pour résultat des pertes de cadence, et une usure prématurée des moules en raison du caractère abrasif du verre.

On sait que l'adhérence du verre sur un métal résulte d'une solution partielle réciproque d'un film d'oxyde formé à la surface du métal, et des oxydes constitutifs du verre (essentiellement silice, chaux et soude pour les verres sodocalciques courants). L'adhésion varie fortement avec la température, qui détermine la croissance de la couche d'oxyde sur le métal, et les vitesses de diffusion des oxydes les uns dans les autres.

De façon générale, on empêche l'adhérence du verre sur les parois du moule en recouvrant celles-ci d'un agent de démoulage.

Les agents de démoulage les plus utilisés sont des suspensions de graphite avec un liant que l'on pulvérise sur les parois du moule. L'adhérence procurée par le liant après évaporation du liquide de suspension et chauffage du moule à sa température de travail reste limitée ; le frottement du verre visqueux sur les parois du moule arrive à supprimer localement la couche de graphite. Il est alors nécessaire de pulvériser à nouveau de la suspension de graphite pour rétablir la couche d'agent de démoulage.

Dans certains cas, on dépose sur les parois du moule du noir de fumée, obtenu par combustion fuligineuse d'un hydrocarbure (propane, acétylène).

On a proposé de nickeler la cavité intérieure des moules pour réduire la tendance au collage. Le dépôt se faisait par déplacement du nickel par le fer du moule dans une solution d'un sel de nickel (nickelage dit chimique). Le nickelage devait réduire la tendance à l'oxydation des moules. L'amélioration apportée s'est révélée insuffisante pour permettre de supprimer la pulvérisation d'un agent de démoulage.

Le document FR-A-2 274 570 décrit une composition de revêtement à base de pigment et de phosphate d'aluminium. Les couches de revêtement sont sensiblement plus épaisses que les couches de suspension de carbone, s'étageant entre 0,025 mm et 0,4 mm, et le revêtement est cuit entre 105° et 760°C. On note que, lorsque le revêtement est appliqué sur les parois d'un moule de verrerie, le pigment est une poudre de graphite, tandis que pour d'autres applications, telles que le garnissage de billettes d'acier, le pigment peut être du bisulfure de molybdène, du mica, du talc, une poudre de verre ou autre pigment lubrifiant.

Dans le cas du garnissage de moule de verrerie, un revêtement de 0,15 mm peut durer 96 heures.

A l'heure actuelle, il ne semble pas que le type de revêtement selon FR-A-2 274 570 soit d'usage courant. On peut penser que, d'une part, l'état de surface de ce garnissage est insuffisant, et que, d'autre part, la présence de ce garnissage rend imprécise la forme de l'article en verre, et difficile la fermeture exacte du moule, le raccordement de la surface du revêtement au plan de joint ou couture du moule ne présentant pas une arête vive et nette.

On évite le collage du verre sur des outillages connexes de moules de verrerie, tels que canaux et goulottes d'amenée de verre visqueux aux moules en utilisant des revêtements analogues à ceux qui sont préconisés pour les moules de verrerie.

Ainsi le document US-A-3 994 703 enseigne de protéger les canaux de guidage d'une charge ou paraison de verre vers un poste de mise en forme, par un garnissage composé d'un pigment lubrifiant, graphite ou bisulfure de molybdène, et d'un liant polymère thermodurcissable, la résistance à l'usure ou l'abrasion étant augmentée par la présence, entre substrat et garnissage, d'une couche d'accrochage poreuse constituée d'un métal de transition avec un carbure ou un nitrure d'un métal de transition.

L'invention a pour but la réalisation d'un revêtement durable de moules de verrerie et outillages connexes, d'efficacité comparable à celles des revêtements de graphite pulvérisé récents, et de forme définissable avec la précision mécanique exigée des moules classiques.

A cet effet l'invention propose un revêtement de parois d'outillages métalliques pour la mise en forme d'une masse de verre visqueux, notamment moules de verrerie, destiné à éviter tout collage de la masse de verre sur les parois avec lesquelles elle est mise en contact, caractérisé en ce qu'il consiste en une couche de métal comprenant en poids, au moins 30 % de molybdène et moins de 4 % de fer, disposée sur au moins les parois venant en contact avec le verre.

On connaît divers processus, projection sous gaz neutre, torche à plasma, pulvérisation sous pression réduite telle que pulvérisation cathodique magnétron, pour déposer une couche de molybdène, qui peut, s'il est nécessaire, être par la suite usinée ou polie.

Il est inattendu pour un homme du métier qui connaît l'excellente soudabilité du verre sur le molybdène, notamment pour l'exécution de passage étanche d'un conducteur métallique à travers une paroi de verre, de voir préconiser le molybdène ou un alliage riche en ce métal comme revêtement capable d'empêcher l'adhérence du verre sur les parois d'un moule de verrerie.

De façon préférée, la couche de métal comprend, au plus 55 % de molybdène, en poids. Et, outre le molybdène, cette couche comprend essentiellement du nickel et du chrome.

De façon préférée, la couche de métal présente une épaisseur comprise entre 0,5 et 0,005 mm, et mieux entre 0,008 et 0,12 mm.

On préfère que la rugosité Ra de la couche de métal soit comprise entre 0,02 et 1µm.

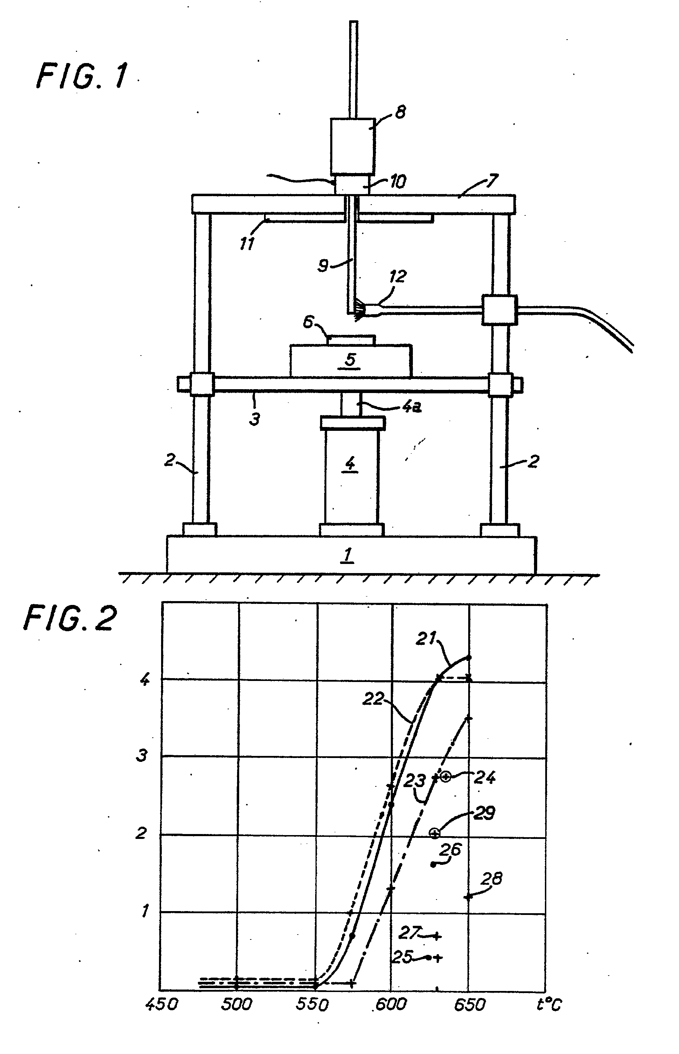

L'invention sera mieux comprise à la lumière de la description qui va suivre, à titre d'exemple, en référence aux dessins annexés dans lesquels: la figure 1 représente schématiquement un appareil de mesure d'adhérence d'un substrat à une baguette de verre; la figure 2 est un diagramme représentatif des forces d'adhésion de divers substrats au verre, dont des substrats selon l'invention.

La mise au point de l'invention a commencé par celle d'un appareil de mesure d'adhérence à chaud de verre sur un substrat, et la vérification d'une corrélation significative entre les mesures d'adhérence effectuées, et les risques de collage du verre sur les parois d'un moule de verrerie.

L'appareil représenté sur la figure 1 comporte un socle 1 qui porte des colonnes 2 verticales pour soutenir une plateforme 7 parallèle au socle 1.

Au centre du socle est disposé un vérin 4 dont la tige 4a peut pousser un plateau 3, mobile verticalement, et guidé parallèlement au socle 1 par les colonnes 2.

Au centre du plateau 3 est fixée une enclume chauffante 5, sur laquelle on peut brider un substrat 6.

La plateforme 7 est percée en son centre par une ouverture 7a par où peut passer une tige de verre 9, verticale. Cette tige est tenue dans un étau 8 qui repose sur la plateforme 7 par l'intermédiaire d'un capteur de force électromécanique 10, de forme annulaire.

La face inférieure de la plateforme 7 est garnie d'un écran thermique 11.

Un chalumeau 12, fixé à une colonne 2, est disposé à hauteur de l'extrémité inférieure de la tige de verre 9, de telle sorte que cette tige se trouve dans la partie chaude de la flamme. Ce chalumeau 12 peut s'éclipser par rotation autour de la colonne 2.

Un essai s'exécute comme suit :

Une tige de verre de composition correspondant sensiblement à celle du verre qui sera utilisé pour mouler des articles, et d'un diamètre de 5 mm, est serrée dans l'étau 8 en traversant la plateforme 7 par l'orifice 7a, de manière que son extrémité inférieure vienne à une distance de l'enclume 5 inférieure à la course de la tige du vérin 4.

On bride un substrat à essayer 6 sur l'enclume chauffante 5 et on le porte à une température mesurée, choisie analogue à celle d'un moule de verrerie, c'est-à-dire dans la gamme 600°-650°C.

Après que le substrat dans sa masse est parvenu à la température choisie dans sa masse, on amène, progressivement pour éviter les chocs thermiques, la flamme du chalumeau 12 sur l'extrémité de la baguette 9, de manière à chauffer cette baguette à une température où le verre est suffisamment mou pour que l'extrémité de la baguette 9 se conforme en goutte, sans toutefois couler; le viscosité est alors analogue à celle d'une paraison.

A ce moment on éclipse le chalumeau 12, et on alimente le vérin 4 en expansion de telle sorte que le substrat 6 soit appliqué sur l'extrémité de la baguette 9 avec une force de 50 da N. Cette force est mesurée comme la différence algébrique des efforts sur le capteur de force 10.

Après un temps suffisant, déterminé expérimentalement et reproduit dans les essais ultérieurs, le verre de l'extrémité de tige s'est figé et se trouve à une température voisine de celle du substrat. On relâche l'effort en expansion du vérin, puis on l'alimente progressivement en rétraction, en suivant les efforts sur le capteur de force 10. A un instant particulier le substrat 6 se détache de l'extrémité de la baguette 9. La différence des forces exercées avant et après le décollage constitue ce que l'on appellera force d'adhérence.

Dans une première phase d'essais on a opéré avec des substrats classiques fontes P1, G2 et V 900, polis avec une rugosité Ra de 0,04 µm, en relevant les forces d'adhésion à des températures croissantes, 500°, 550°, 575°, 600°, 630° et 650°C.

Les résultats sont consignés sur les courbes 21, 22 et 23 correspondant respectivement aux fontes P1, G2 et V 900, du diagramme de la figure 2. Ces substrats ont un état de surface poli miroir (Ra compris entre 0,02 et 0,04 µm), correspondant à l'état de surface des moules.

De ces courbes on a tiré les enseignements suivants :

L'allure générale de la courbe présente, vers les basses températures, un palier de très faible adhérence (de l'ordre de 0,1 à 0,2 da N), puis une partie fortement ascendante, commençant vers 550°C pour les fontes P1 et G2, et 575°C pour la fonte V 900, suivie d'une partie qui tend vers une valeur asymptote voisine de 4 da N.

Ces essais sont apparus sensiblement reproductibles et relativement peu dépendants de la température du verre à l'extrémité de la baguette 9, en ce sens que, bien que l'application du substrat 6, qui déforme l'extrémité de la baguette, puisse donner des surfaces de contact de diamètre compris entre 5 et 10 mm, ce qui correspond à une pression de contact entre $2,5 \times 10^5$ et $6 \times 10^4$ Pa, la force de décollage pour une température donnée du substrat 6, varie peu pour chaque type de substrat.

On précise que la température du substrat 6 est prise au voisinage de l'enclume chauffante 5, et que la température superficielle peut être inférieure de 50° à 80°C.

Il est apparu que la mesure de la force d'adhérence était significative en prenant une température de substrat (mesurée) de 630°C, qui correspond sensiblement à celle des moules de verrerie.

Par ailleurs il apparaît que le classement des forces d'adhérence sur substrats de fonte P1, G2 et V 900 correspond au classement empirique des risques d'adhérence sur moules de ces nuances.

La corrélation s'est affirmée avec un essai sur un substrat de fonte P1 nickelée chimiquement (point 24 du diagramme) dont la force d'adhérence s'est élevée à 2,8 da N, ce qui est meilleur que pour les fontes P1 et G2, nues, et pratiquement équivalent à la fonte V 900 : ces résultats correspondent aux résultats empiriques en production.

En outre, des essais avec utilisation d'agents dits de démoulage classique en verrerie ont donné des forces d'adhérence comprises entre 0,5 (point 25) et 1,6 da N (point 26) en corrélation avec l'expérience de l'homme du métier.

Des essais annexes, sur des substrats de fonte avec une rugosité Ra de 0,2 µm, ont fait apparaître des forces d'adhérence de 5 à 7,5 da N. De plus un essai avec un recouvrement de zircone, dont la solubilité dans les verres est connue, a présenté une force d'adhérence de 40 da N.

C'est alors que la Demanderesse a découvert qu'une couche de molybdène déposée sur un substrat présentait (point 27 du diagramme) une force d'adhérence de 0,6 da N, cette valeur étant sensiblement indépendante du mode de dépôt de la couche (pulvérisation sous gaz neutre, torche à plasma, pulvérisation cathodique magnétron), de son épaisseur, et de son état de surface (Ra entre 1 µm et 0,02 µm).

Il a été recherché si l'effet de réduction d'adhérence se répercutait sur des alliages de molybdène tels que le Triballoy 700® (Mo 32 %, Ni 50 %, Cr 15 %, Si 3 %).

Cet alliage s'est révélé dans un premier temps sensiblement équivalent à la fonte V 900, ou la fonte P1 nickelée chimiquement.

Par ailleurs, le point 28 (650°C - 1,2 da N) correspond à un revêtement de molybdène sur fonte V 900, susceptible de travailler à température plus élevée que les fontes P1 et G2.

Le mécanisme de la réduction d'adhérence propre au molybdène n'a pas été clairement élucidé. On sait toutefois que l'oxydation du molybdène devient notable entre 600 et 700°C, avec formation d'anhydride molybdique $MoO_3$ dont la sublimation commence vers 600°C. On pourrait supposer une analogie de mécanisme avec le graphite dont les oxydes définis sont gazeux.

L'essai avec le Triballoy 700®, qui présente une force d'adhérence d'un tiers inférieure à celle de la fonte, et que comporte 30 % de molybdène, laisse entendre que l'efficacité du molybdène est fonction du rapport de la surface qu'il occupe à la surface totale du substrat.

La Demanderesse a voulu préciser ce point et a exécuté une série d'essais avec des substrats qui ont été recouverts de couches d'alliages de molybdène, obtenus par projection à la torche à plasma de mélanges de poudres de molybdène et de Triballoy 700®. Les résultats moyens d'adhérence à 630°C, suivant la teneur en molybdène de l'alliage projeté, sont consignés dans le tableau suivant :

| Teneur en Mo en poids | Force d'adhérence |
|---|---|
| 100% (rappel) | 0,6 da N |
| 80% | 1,1 da N |
| 66% | 1,4 da N |
| 50% | 1,85 da N |
| 30% (Triballoy 700®) | 2,8 da N |

On a alors conclu que la variation de force d'adhérence est une fonction sensiblement linéaire de la teneur en molybdène, au moins jusqu'à 50 %. En outre, dans cette gamme de 50 à 100 % de molybdène, les forces d'adhérence restent du même ordre que celles que l'on détermine avec des agents de démoulage.

On a mis en évidence que le comportement du molybdène vis-à-vis du verre était plus proche de celui d'un substrat garni d'un agent de démoulage, que de celui des fontes utilisées pour constituer des moules, à l'aide d'un test, sur un dispositif analogue à celui de la figure 1, où le substrat chauffé est incliné à environ 30° sur l'horizontale, et où, au lieu de faire monter le plateau 3, on pousse le chauffage de l'extrémité inférieure de la tige de verre 9 jusqu'à ce que la goutte descende sur le substrat en laissant un fil entre elle et le reste de la tige. Alors, dans ces conditions, sur un substrat en fonte polie la goutte roule en s'entourant du fil ; sur un substrat garni d'une couche de molybdène, même de rugosité aussi élevée que Ra = 1 μm, la goutte glisse sans rouler ; un substrat de fonte sur lequel on a pulvérisé un agent de démoulage induit le même comportement de la goutte, d'un glissage sans roulement.

Pour des essais, on a garni des moules de verrerie d'une couche de molybdène projetée par torche à plasma. L'épaisseur des couches a été fixée à 0,1 mm, ce qui est apparu comme un bon compromis entre la longévité des moules et la résistance aux chocs thermiques ; en effet, la fonte présente un coefficient de dilatation plus élevé que le molybdène, de sorte qu'une couche épaisse risque de s'écailler au chauffage du moule.

Toutefois des essais prolongés en production et des essais systématiques de vieillissement à 600°C ont fait apparaître que les revêtements qui contenaient 60 % et plus de molybdène se dégradaient plus vite que les revêtements à teneurs inférieures ; cette dégradation, due à l'oxydation, se traduisait par une perte sensible de cohésion du revêtement. Parallèlement, on a constaté la présence de traces de trioxyde de molybdène sur des pièces en verre moulées avec ces revêtements à 60 % et plus de molybdène.

Aussi s'est-il imposé de ne pas utiliser des revêtements à plus de 55 % en poids de molybdène. Par ailleurs, on notera que le prix des revêtements croît avec la teneur en molybdène.

L'étroitesse de la fourchette de teneurs en molybdène a conduit à revoir les essais effectués avec des revêtements à teneur inférieure à 50 % de molybdène, et notamment avec le Triballoy 700® (Mo 32 %, Ni 50 %, Cr 15 %, Si 3 %).

Des déterminations de composition réelle d'une couche de Triballoy® a fait apparaître une teneur en fer de 8 %. Cette teneur en fer résultait de ce que, pour améliorer la liaison entre le revêtement et son substrat de fonte P1, on avait opéré suivant un processus de projection-refusion, afin d'assurer des diffusions réciproques des métaux de part et d'autre de l'interface. La diffusion du fer dans le Triballoy® était notable.

On a donc exécuté des revêtements de Triballoy®, sans refusion de la couche. La teneur en fer contrôlée est apparue inférieure à 2 % en poids. Des mesures corrélatives de force d'adhérence suivant le processus défini ci-avant ont fait apparaître une force de 2,0 da N (point 29 du diagramme de la figure 2) au lieu de 2,8 précédemment (point 24 du diagramme).

On a repris alors les mesures correspondant à un alliage à 50 % de molybdène (voir le tableau). Cet alliage à 50 % a accusé une force d'adhérence de 1,65 da N, au lieu de 1,85 da N précédemment, en prenant les précautions appropriées pour que la teneur en fer soit d'au plus 2 %.

L'influence du fer sur la force d'adhérence des alliages à forte teneur en molybdène a été confirmée par des essais avec du Hastelloy B (Mo 28 %, Ni 67 %, Fe 5 %), force d'adhérence de l'ordre de 2,8 da N.

Il est curieux de constater qu'un article de la revue japonaise Asahi Garasu Kenhyu Hokoku, n° 15, 1965, pages 103-112, par T. Yoshio et M. Hara traite d'essais de collage de métaux aux verres, pour déterminer les revêtements préférables pour le pressage du verre, et conclut que le métal préférable est de loin le nickel. Certains essais ont été effectués sur des compositions présentées comme constituées de fer et de nickel, dont le Hastelloy B®. Les auteurs concluent que le Hastelloy B® a des propriétés relativement favorables, mais nettement inférieures au nickel pur, le fer et le nickel conservant leurs propriétés d'adhérence propres à l'état allié. L'effet du molybdène n'a pas été envisagé. On peut penser que cet effet du molybdène a été masqué par la présence de 5 % de fer.

Des essais de garnissage de moules de verrerie avec du Triballoy 700® ont confirmé que l'inhibition du collage du verre était obtenue, et que les revêtements ne présentaient pas de dégradations prématurées.

Les revêtements à teneurs en molybdène comprises entre 30 et 55 % en poids se sont également révélés efficaces pour garnir les parois d'outillages connexes, couloirs et goulottes d'amenée de verre visqueux vers les moules, notamment. On remarquera que ces outillages travaillent à des températures moyennes plus basses que les moules de verrerie, car il ne leur est pas demandé de refroidir le verre visqueux. Dans la mesure où les hypothèses sur l'effet de sublimation du trioxyde de molybdène sont valides, on peut estimer que la surface du revêtement prend, de façon transitoire, une température supérieure à 600°C, où la volatilisation du trioxyde est notable.

Quoi qu'il en soit, expérimentalement, on obtient, avec des revêtements à 30-55 % de molybdène, des propriétés de glissement dans les canaux et goulottes où circulent des paraisons comparables en qualité aux laques et vernis lubrifiants usuels, avec une longévité non comparable à celle de ces laques et vernis.

A propos de longévité des revêtements, il faut comprendre que la longévité ne doit pas s'entendre au premier chef dans le sens où elle permet une économie sur les dépenses d'entretien et de remises en état des moules et outillages connexes, mais dans le sens où cette longévité permet que sur une campagne de marche, par exemple de quarante-huit heures, d'une machine telle qu'une machine à souffler-mouler des bouteilles, la probabilité de défaillance d'un moule ou d'un outillage connexe soit infime. En effet, si la fabrication avec une telle machine est arrêtée pour une durée notable pour changer un organe défaillant, il est pratiquement impossible de la reprendre.

### Revendications

1. Revêtement de parois d'outillages métalliques pour la mise en forme d'une masse de verre visqueux, notamment moules de verrerie, destiné à éviter tout collage de la masse de verre sur les parois avec lesquelles elle est mise en contact, caractérisé en ce qu'il consiste en une couche de métal comprenant, en poids, au moins 30 % de molybdène et moins de 4 % de fer, disposée sur au moins les parois venant en contact avec le verre.

2. Revêtement selon la revendication 1, caractérisé en ce que la couche de métal comprend au plus 55 % de molybdène en poids.

3. Revêtement selon l'une des revendications 1 et 2, caractérisé en ce que la couche de métal comprend, avec le molybdène, essentiellement du nickel et du chrome.

4. Revêtement selon l'une quelconque des revendications 1 à 3, caractérisé en ce que la couche de métal présente une épaisseur comprise entre 0,5 et 0,005 mm environ.

5. Revêtement selon la revendication 4, caractérisé en ce que la couche de métal présente une épaisseur comprise entre 0,12 et 0,008 mm environ.

6. Revêtement selon une quelconque des revendications 1 à 5, caractérisé en ce que la couche de métal présente une rugosité Ra comprise entre 0,02 et 1µm.

### Patentansprüche

1. Überzug für Wandungen metallischer Werkzeuge für das Formen einer viskosen Glasmasse, insbesondere Glashüttenformen, der bestimmt ist, jedes Kleben der Glasmasse an den mit ihr in Kontakt kommenden Wandungen zu vermeiden, dadurch gekennzeichnet, daß er aus einer Metallschicht besteht, die wenigstens 30 Gew.-% Molybdän und wenigstens 4 Gew.-% Eisen umfaßt, welcher auf wenigstens einer der mit dem Glas in Kontakt kommenden Wandungen angeordnet ist.

2. Überzug nach Anspruch 1, dadurch gekennzeichnet, dass die Metallschicht höchstens 55 Gew.-% Molybdän umfaßt.

3. Überzug nach einem der Ansprüche 1 und 2, dadurch gekennzeichnet, daß die Metallschicht zu dem Molybdän im wesentlichen Nickel und Chrom umfaßt.

4. Überzug nach einem der Ansprüche 1 bis 3, dadurch gekennzeichnet daß die Metallschicht etwa eine Dicke zwischen 0,5 und 0,05 mm aufweist.

5. Überzug nach Anspruch 4, dadurch gekennzeichnet, daß die Metallschicht etwa eine Dicke zwischen 0,12 und 0,008 mm aufweist.

6. Überzug nach einem der Ansprüche 1 bis 5, dadurch gekennzeichnet, daß die Metallschicht eine Rauheit bzw. Unebenheit Ra zwischen 0,02 und 1µm aufweist.

### Claims

1. A coating for the surfaces of metallic equipment for shaping a mass of viscous glass, in particular glassmaking moulds, intended to avoid any adhesion of the mass of glass of the surfaces with which it comes in contact, characterized in that it consists of a metal layer comprising, by weight, at least 30% molybdenum and less than 4% iron, disposed at least on the surfaces coming into contact with the glass.

2. A coating according to Claim 1, characterized in that the metal layer comprises at most 55% of molybdenum by weight.

3. A coating according to Claim 1 or Claim 2, characterized in that the metal layer comprises, besides molybdenum, substantially nickel and chromium.

4. A coating according to any one of Claims 1 to 3, characterized in that the metal layer has a thickness of between about 0.5 and 0.005 mm.

5. A coating according to Claim 4, characterized in that the metal layer has a thickness of between about 0.12 and 0.008 mm.

6. A coating according to any one of Claims 1 to 5, characterized in that the metal layer has a roughness Ra of between about 0.02 and 1 μm.

FIG. 1

FIG. 2